# EUROPEAN PATENT APPLICATION

(11) **EP 4 790 580 A1**
(43) Date of publication of application: **12.08.2026**
(21) Application number: 26155287.1
(22) Date of filing: 30.01.2026
(51) Int. Cl.: G06F 21/64, H04N 1/32, H04N 23/67

(54) **INFORMATION PROCESSING APPARATUS, IMAGE CAPTURING APPARATUS, INFORMATION PROCESSING METHOD, AND COMPUTER PROGRAM**

(30) Priority: 07.02.2025 JP 2025019367
(71) Applicant: Canon Kabushiki Kaisha, Tokyo, 146-8501 (JP)
(72) Inventor: SASAKI, Takashi, Ohta-ku, Tokyo, 146-8501 (JP)
(74) Representative: TBK

(57) **Abstract**

There is provided an information processing apparatus. Determination means performs determination processing including determining whether a shot image is an image obtained by shooting a flat surface, based on depth information indicating a distribution of depth values that are values corresponding to distances in a depth direction corresponding to the shot image. Signature means generates a digital signature for a determination result from the determination processing. Association means associates the determination result and the digital signature with the shot image.

## Description

### TECHNICAL FIELD

The present disclosure relates to an information processing apparatus, an image capturing apparatus, an information processing method, and a computer program.

### BACKGROUND

In recent years, information sharing via the Internet has been actively performed, and anyone has become able to publish and disseminate various types of information to an unspecified large number of people. Also, various types of processing can also be performed on digital images. In such circumstances, information may come from unreliable sources, or information that has been disclosed may be improperly tampered with.

A past technique is known which makes it possible to verify whether an original image has been tampered with by generating a hash value from an image when the image is shot by a digital camera and then generating a digitally-signed image (see Japanese Patent Laid-Open No. 2008-005421).

A technique has also been proposed which makes it possible to verify whether a shot image is an image obtained by shooting an actual 3D object or an image obtained by shooting an image appearing on a monitor (a flat surface) by recording metadata including three-dimensional (3D) depth information in a digital signature at the time of the shooting (see "Providing authenticity camera solutions including C2PA standard compliance for news organizations",
<URL: https://www.sony.co.jp/corporate/information/news/202403/24-008/>).

### SUMMARY

With the technique according to "Providing authenticity camera solutions including C2PA standard compliance for news organizations", it is necessary for a user to visually evaluate the 3D depth information in order to verify whether the shot image is an image obtained by shooting an actual 3D object, which places a heavy burden on the user. The technique disclosed in Japanese Patent Laid-Open No. 2008-005421, meanwhile, relates to whether an image has been tampered with, and is not intended to verify whether a shot image is an image obtained by shooting an actual 3D object.

The present disclosure provides, in at least some aspects thereof, a technique for lightening a load on a user for confirming whether a shot image is an image obtained by shooting an actual 3D object.

The present disclosure in its first aspect provides an information processing apparatus as specified in claim 1. Optional features are specified in claim 2 to 14.

The present disclosure in its second aspect provides an image capturing apparatus as specified in claim 15. Optional features are specified in claim 16.

The present disclosure in its third aspect provides an information processing method as specified in claim 17.

The present disclosure in its fourth aspect provides a computer program as specified in claim 18.

Features of the present disclosure will become apparent from the following description of embodiments with reference to the attached drawings. The following description of embodiments is described by way of example.

### BRIEF DESCRIPTION OF THE DRAWINGS

Fig. 1 is a block diagram illustrating the configuration of an image capturing apparatus 100 (an information processing apparatus).
Fig. 2 is a flowchart illustrating a processing sequence through which the image capturing apparatus 100 generates an image file when shooting.
Fig. 3A is a diagram illustrating an example of a shot image.
Fig. 3B is a diagram illustrating a defocus map generated in step S203.
Fig. 4 is a diagram illustrating a histogram of the defocus map illustrated in Fig. 3B.
Fig. 5 is a diagram illustrating a histogram corresponding to an image shot when focusing on a screen such as a monitor, in a situation where a subject is projected on the monitor.
Fig. 6 is a diagram illustrating an example of an image file 600 including metadata.
Fig. 7 is a diagram illustrating an icon added to the image file 600 being displayed along with the shot image illustrated in Fig. 3A.
Fig. 8 is a diagram illustrating an icon 801 corresponding to a case where an anomaly determination result is "anomalous" (i.e., when a flat surface is determined to have been shot) being displayed along with a shot image.
Fig. 9 is a diagram illustrating an example of a case where an image obtained by shooting a flat object is determined to be "natural."

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

In the present embodiment, an image capturing apparatus 100 analyzes depth information corresponding to a shot image, and determines whether the shot image is an image in which a subject having an uneven shape (a 3D subject) has actually been shot or an image in which a subject projected onto a flat surface such as a monitor (a two-dimensional (2D) subject) has been shot. The image capturing apparatus 100 generates an image file in which the determination result is digitally signed.

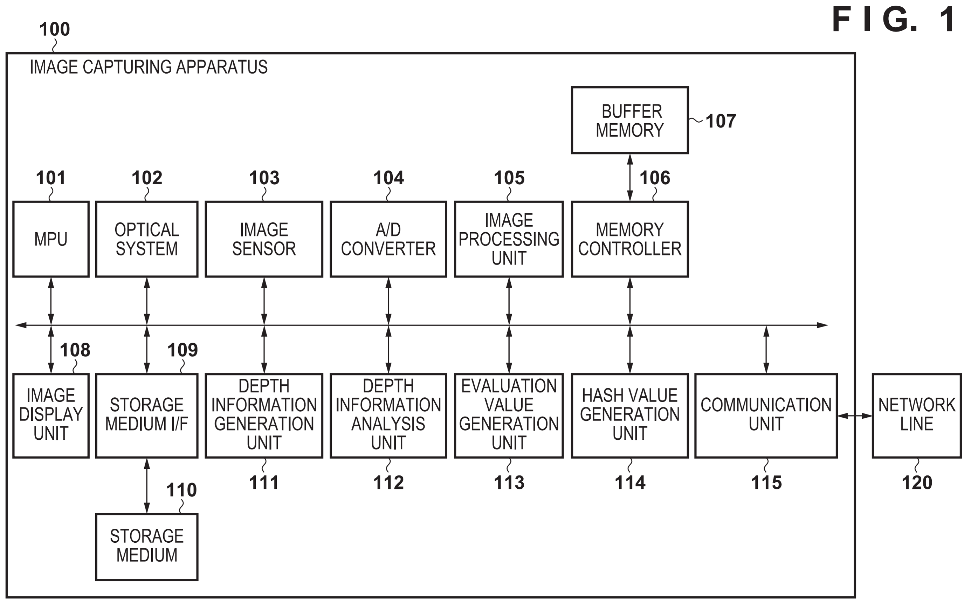

Fig. 1 is a block diagram illustrating the configuration of the image capturing apparatus 100 (an information processing apparatus). The image capturing apparatus 100 is an electronic device such as a digital camera, a digital video camera, or a mobile phone or computer device provided with a camera function.

The image capturing apparatus 100 includes a micro processing unit (MPU) 101, an optical system 102, an image sensor 103, an A/D converter 104, an image processing unit 105, a memory controller 106, a buffer memory 107, and an image display unit 108. The image capturing apparatus 100 also includes a storage medium I/F 109, a storage medium 110, a depth information generation unit 111, a depth information analysis unit 112, an evaluation value generation unit 113, a hash value generation unit 114, and a communication unit 115.

The MPU 101 is a microcontroller for controlling the system of the image capturing apparatus 100, such as shooting sequences and the like.

The optical system 102 forms a subject image on the image sensor 103. The optical system 102 includes, for example, a fixed lens, a magnifying lens that changes a focal length, a focus lens that adjusts focus, and the like. The optical system 102 also includes an aperture stop, and adjusts the amount of light during shooting by using the aperture stop to adjust the diameter of an opening in the optical system.

The image sensor 103 is an image sensor such as a CCD, a CMOS sensor, or the like that converts light reflected by a subject into an electrical signal (analog image data) and outputs the signal to the A/D converter 104. The A/D converter 104 converts the analog image data read out from the image sensor 103 into digital image data. The digital image data is recorded into the buffer memory 107 through the memory controller 106. The digital image data will be called simply "image data" hereinafter.

The image processing unit 105 generates image data to which various types of image processing, such as white balance adjustment, color interpolation, gamma processing, and the like, have been applied, by applying various types of image processing to the image data stored in the buffer memory 107.

The memory controller 106 controls the reading and writing of the image data from and to the buffer memory 107, refresh operations of the buffer memory 107, and the like. Additionally, as will be described later, the MPU 101 generates an image file in which metadata has been added to the image data. The memory controller 106 writes the image file to the buffer memory 107 as well.

The buffer memory 107 stores the image data, the image files, and the like. The image display unit 108 displays images corresponding to the image files stored in the buffer memory 107.

The storage medium I/F 109 is an interface for controlling the reading and writing of data from and to the storage medium 110. The storage medium 110 is a storage medium configured to be capable of being inserted into and removed from the image capturing apparatus 100, such as a memory card or the like, and stores programs, image files, and the like.

The depth information generation unit 111 generates depth information corresponding to the image data. The processing for generating the depth information will be described in detail later. The generated depth information is added to the image data as metadata. The image data to which the metadata has been added is stored in the buffer memory 107 as an image file.

The depth information analysis unit 112 analyzes the depth information. The processing for analyzing the depth information will be described in detail later. A result of analyzing the depth information is stored in the buffer memory 107.

The evaluation value generation unit 113 determines, on the basis of the result of analyzing the depth information, whether a shot image is an image in which a subject having an uneven shape has actually been shot or an image in which a subject projected onto a flat surface such as a monitor has been shot, and outputs a determination result as an evaluation value. The evaluation value is added to the image data as metadata. The image data to which the metadata has been added is stored in the buffer memory 107 as an image file.

The hash value generation unit 114 generates (calculates) a hash value by executing a hash function on the image file stored in the buffer memory 107. The processing for generating the hash value will be described in detail later.

The communication unit 115 is connected to a network line 120 such as the Internet, and exchanges data with an external apparatus.

Note that the processing by the depth information generation unit 111, the depth information analysis unit 112, the evaluation value generation unit 113, and the hash value generation unit 114 may be performed by the MPU 101 instead of those units.

**In the** present embodiment, a photographer can turn an "anomaly detection function" (a predetermined setting item pertaining to the association of the determination result) on or off in a menu screen (a settings screen) of the image capturing apparatus 100. In the present embodiment, "anomaly" refers to a situation in which an image, a video, or the like projected onto a flat monitor is shot, as well as to an image shot in that situation.

When a shot is taken while the anomaly detection function is on, the image capturing apparatus 100 determines whether the shot image is an image obtained by actually shooting a subject having an uneven shape or an image obtained by shooting a subject projected onto a flat surface such as a monitor. The image capturing apparatus 100 digitally signs and records an evaluation value corresponding to the result of the determination. Accordingly, when the anomaly detection function is set to on, the image capturing apparatus 100 associates the determination result, and the digital signature for the determination result, with the shot image, in accordance with the shot image having been generated. Conversely, when the anomaly detection function is set to off, the image capturing apparatus 100 does not perform processing for associating the determination result and the digital signature for the determination result with the shot image, even if the shot image has been generated.

The "anomaly detection function" is turned on and off through the menu screen, and thus the user does not need to determine and set whether to digitally sign and record the evaluation value each time a shot is taken.

The user can refer to the evaluation value when displaying images in the image capturing apparatus 100, when opening images using an application on an external apparatus (an external information processing apparatus), and the like. Through this, the user can easily understand whether the displayed image (the shot image to be displayed) is an image obtained by shooting a subject having an uneven shape (a normal image) or an image obtained by shooting a flat surface (an anomalous image).

Furthermore, because the evaluation value is digitally signed, the user can later confirm whether the evaluation value has been tampered with. In particular, when sending images shot by the user themselves over the Internet, the images can be publicized along with proof that the images are authentic. Accordingly, in the present embodiment, value in terms of credibility can be added to the image. Furthermore, when the user obtains an image published by another person, the user can confirm that the image is not a fraudulent image simply by looking at the evaluation value. The present embodiment can therefore improve the convenience for the user.

As long as the "anomaly detection function" setting is not changed by the user, the setting is kept even if the power of the image capturing apparatus 100 is turned off. Alternatively, the configuration may be such that the "anomaly detection function" is reset to either on or off each time the power of the image capturing apparatus 100 is turned on.

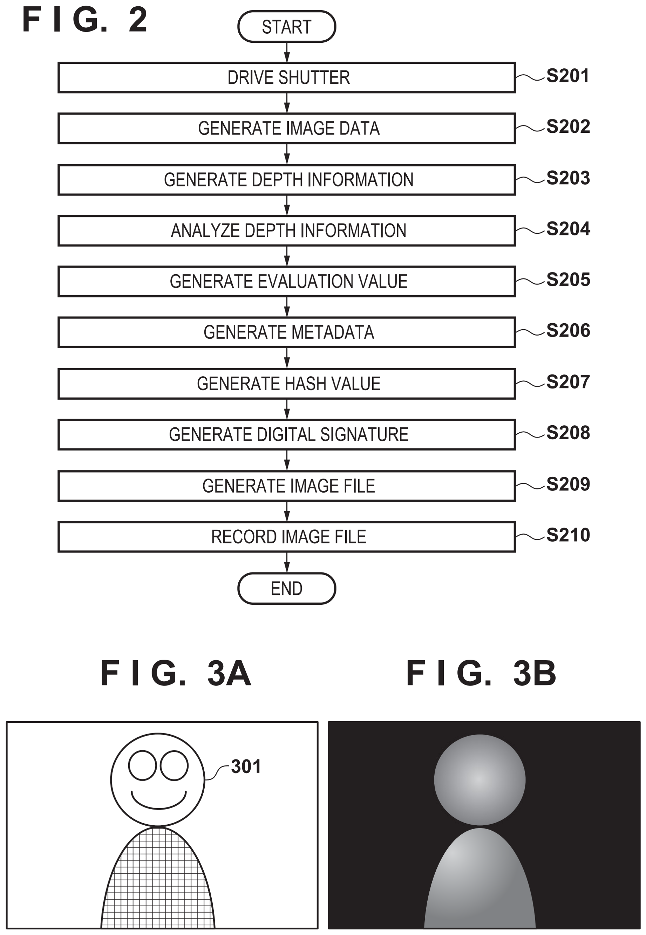

Fig. 2 is a flowchart illustrating a processing sequence through which the image capturing apparatus 100 generates an image file when shooting. Unless otherwise specified, the processing in each step of the flowchart is realized by the MPU 101 of the image capturing apparatus 100 executing programs stored in the storage medium 110, a ROM (not shown), or the like. The processing in this flowchart is started in response to the image capturing apparatus 100 accepting a shooting start operation, such as when a shooting button of the image capturing apparatus 100 is pressed by a photographer.

In step S201, the MPU 101 drives a shutter (not shown) disposed on the subject side of the image sensor 103 in order to control the exposure time.

In step S202, the image sensor 103 performs image capturing processing that converts subject light received through the shutter into an electrical signal (analog image data). The image processing unit 105 then generates image data by performing image processing such as development processing on the digital image data obtained through the A/D converter 104.

Fig. 3A is a diagram illustrating an example of the shot image. The shot image is an image in which a person 301 appears, and is an image obtained by shooting an actual person. A face region is assumed to be in focus.

In step S203, the depth information generation unit 111 generates a distance distribution (depth information) in a depth direction of the subject, corresponding to the image data generated in step S202. As disclosed in, for example, Japanese Patent Laid-Open No. 2008-015754, the depth information is generated by calculating a defocus value at each of pixel positions on an image capturing surface, on the basis of a phase difference image obtained from an image sensor in which all pixels are phase difference pixels. The generated depth information is two-dimensional information having the same structure as the shot image. The defocus value is a value that varies according to the amount of deviation of a position in the depth direction from the distance of a subject in focus in the shot image, and is therefore information equivalent to the distance distribution in the depth direction of the subject at the time of shooting. The depth information will be called a "defocus map" hereinafter. The defocus map is added to (associated with) the image data as metadata. The image data to which the metadata has been added is stored in the buffer memory 107 as an image file.

Fig. 3B is a diagram illustrating the defocus map generated in step S203. In Fig. 3B, the defocus value, which is a pixel value, is converted into a grayscale value and visualized. The defocus map has 8-bit tones, and the region in focus has a value of 128. In Fig. 3B, the grayscale value changes because an actual person having an uneven shape is being shot. Pixels having a closer subject distance have values closer to white (greater pixel values), whereas pixels having a farther subject distance have values closer to black (smaller pixel values). The face region in focus is expressed with a smooth tone according to the distance, centered on 15% gray. A body region further in the background than the face region is expressed with tones according to the distance, starting from 35% gray.

Note that the depth information is not limited to a defocus map, and may be information in any format as long as the format indicates a distribution of values corresponding to the distance in the depth direction corresponding to the shot image (also called "depth values" hereinafter; information indicating a change in accordance with the distance distribution in the depth direction). When the depth information is a defocus map, the depth value is a defocus value.

For example, the depth information may be a distribution of values obtained by further normalizing the defocus values by the focal depth (e.g., 1Fδ, where F is the aperture value and δ is the permissible diameter of the circle of confusion). Here, the aperture value F may be a fully fixed value using the aperture value near the center of the image height as a representative value, or an aperture value distribution may be applied taking into account the fact that the aperture value at peripheral image heights darkens due to vignetting in the optical system.

As another example, the depth information may be two-dimensional information indicating a phase difference (an image shift amount) used to derive the defocus value.

As yet another example, the depth information may be a map converted to actual distance information on the subject side via the focus lens position.

In step S204, the depth information analysis unit 112 analyzes the defocus map generated in step S203. Specifically, the depth information analysis unit 112 generates a histogram of the defocus map.

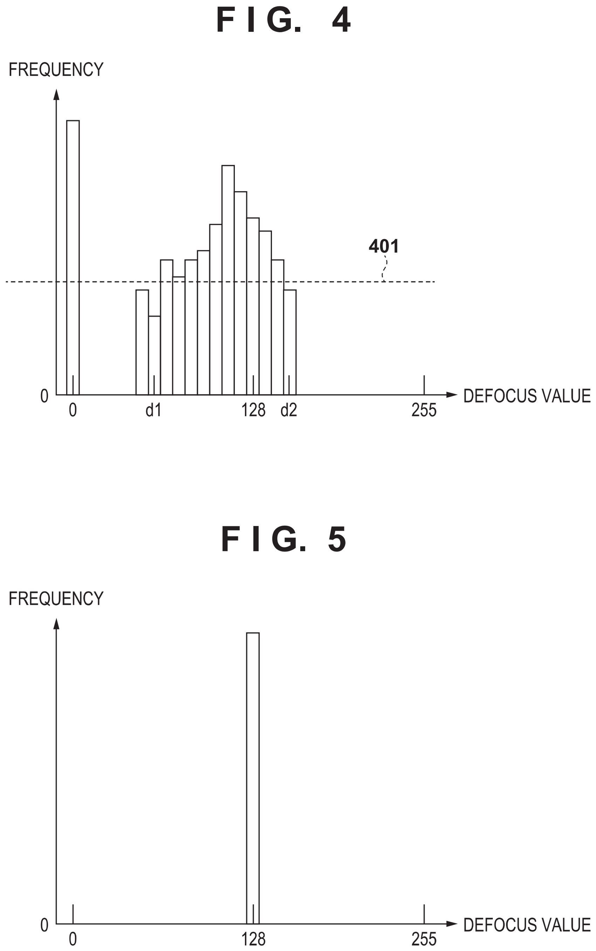

Fig. 4 is a diagram illustrating the histogram of the defocus map illustrated in Fig. 3B. In Fig. 4, the horizontal axis represents the defocus value, and the vertical axis represents the frequency at which the corresponding defocus value exists in the map. In Fig. 4, a single peak having a defocus value near 128 corresponds to the person 301. Because an actual person having an uneven shape is being shot, it can be confirmed that the base of the peak spreads and the distance changes smoothly. A peak response at a defocus value of 0 corresponds to the background, and corresponds to the region indicated by black in Fig. 3B.

A method that makes a determination on the basis of the shape of the histogram can be used as the method for determining the presence or absence of an uneven shape using a histogram. For example, when no peak having a base width greater than a predetermined threshold is present in the histogram, the shot image can be considered to be an image obtained by shooting a flat surface. As a specific example, first, the depth information analysis unit 112 detects a maximum value in the histogram. Next, the depth information analysis unit 112 searches for valleys in the left and right directions to extract a single mass centered on the maximum value. For example, the depth information analysis unit 112 extracts a defocus value having a frequency less than a predetermined threshold (in the example in Fig. 4, a frequency threshold 401 (a first threshold)). Then, by comparing the frequency of the extracted defocus value with the frequencies of adjacent defocus values, the depth information analysis unit 112 determines whether a condition that the frequency of the extracted defocus value is a minimum value or on a boundary with a frequency of 0 ("condition 1", hereinafter) is satisfied. If condition 1 is satisfied, the depth information analysis unit 112 sets the extracted defocus value as a valley in the histogram. If a plurality of defocus values are extracted, this determination is made for each extracted defocus value. As a result, in Fig. 4, defocus values d1 and d2 are set as valleys.

Then, the depth information analysis unit 112 determines whether a condition that the difference between the defocus values d1 and d2 of the two valleys detected at the left and right of the maximum value (i.e., the base width of the peak) is greater than a predetermined threshold (a second threshold) is satisfied ("condition 2A", hereinafter). If condition 2A is satisfied, the depth information analysis unit 112 determines that an uneven shape is present. Note that instead of condition 2A, the depth information analysis unit 112 may use a condition that the difference between the defocus values d1 and d2 of the two valleys detected at the left and right of the maximum value (i.e., the base width of the peak) is greater than a predetermined threshold (the second threshold) and the difference between the frequency at the maximum value and the frequency at the valleys is greater than a predetermined threshold (a third threshold) ("condition 2B", hereinafter). If condition 2B is satisfied, the depth information analysis unit 112 determines that an uneven shape is present.

A method based on an average of the depth values (defocus values) in the depth information and a variance or standard deviation of the depth values in the depth information can be given as another example of a method for determining the presence or absence of an uneven shape. In this method, the depth information analysis unit 112 may calculate the average and the variance using a histogram.

The average of the histogram is calculated through the following Formula 1. $Average = \frac{\sum \left(defocus value\times frequency\right)}{total number of pieces of data}$

Which depth region the subject is present at can be determined by referring to the average.

The variance of the histogram is calculated through the following Formula 2. $Variance = \frac{\sum \left({\left(defocus value\right)}^{2}\times frequency\right)}{total number of pieces of data} - {\left(average\right)}^{2}$

The variance is a value which increases as the base of the peak in the histogram broadens. Whether a three-dimensional subject having an uneven shape is present can be determined by referring to the variance (described in detail with reference to step S205).

Although a histogram is described as being used to calculate the average and variance for descriptive purposes, the average and variance can also be calculated using each of the depth values included in the depth information, rather than using a histogram.

Additionally, as described earlier, the depth information analysis unit 112 may use a standard deviation instead of the variance. The standard deviation is found by taking the square root of the variance.

Here, a histogram corresponding to an image shot when focusing on a screen such as a monitor (i.e., an image corresponding to the "anomaly" described above), in a situation where a subject is projected onto the monitor, will be described with reference to Fig. 5. When a user wishes to shoot an anomalous image intentionally, the user can be expected to shoot the image with the camera and the monitor directly facing each other, and with the camera focused on the monitor, in order to reproduce the original image as-is. The histogram of the defocus map in the image shot in such a situation theoretically has an average of 128 and a variance of 0.

Accordingly, whether a shot image is an image in which a subject having an uneven shape has actually been shot or an image in which a subject projected onto a flat surface such as a monitor has been shot can be determined by referring to the average and the variance of the histogram of the shot image.

Although the foregoing describes the entirety of the shot image as being the region used for analyzing the depth information, the configuration is not limited thereto. For example, the image capturing apparatus 100 may detect a subject region in the shot image using a publicly-known subject detection technique, and use the detected subject region as the region for analysis. In this case, the image capturing apparatus 100 analyzes the part of the depth information corresponding to the subject region. Using such a configuration makes it possible to determine whether the subject has an uneven shape or is flat in the region where an important subject is present in the shot region, in the situation where an image is projected by placing the monitor only in a part of the range of shooting.

In step S205, on the basis of the result of the analysis performed in step S204, the evaluation value generation unit 113 generates an evaluation value indicating whether the shot image is an image obtained by actually shooting a subject having an uneven shape or an image obtained by shooting a subject projected onto a flat surface such as a monitor or the like. For example, if the stated condition 2A (or condition 2B) is not satisfied, the evaluation value generation unit 113 determines that there is no depth in the shot image (no unevenness), and generates an evaluation value of "0" to indicate that a flat object has been shot. On the other hand, if condition 2A (or condition 2B) is satisfied, the evaluation value generation unit 113 generates an evaluation value of "1" to indicate that a three-dimensional object has been shot.

When using an analysis method that utilizes an average and variance (or standard deviation) of the depth values in the depth information, the evaluation value generation unit 113 determines whether a condition that the average is not within a predetermined range (e.g., 112 to 144) that includes the value corresponding to the focus distance of the shot image (128, in the present embodiment), or that the variance (or the standard deviation) is at least a predetermined threshold (a fourth threshold) ("condition 3", hereinafter), is satisfied. When condition 3 is not satisfied (when the average is within the predetermined range that includes a value corresponding to the focus distance of the shot image, and the variance (or standard deviation) is less than the predetermined threshold), the evaluation value generation unit 113 determines that there is no depth in the shot image, and generates an evaluation value of "0" to indicate that a flat object has been shot. On the other hand, if condition 3 is satisfied, an evaluation value of "1" is generated to indicate that a three-dimensional object has been shot.

In step S206, the MPU 101 generates metadata including the evaluation value generated in step S205 (the determination result from the determination processing for determining whether the shot image is an image obtained by shooting a flat surface).

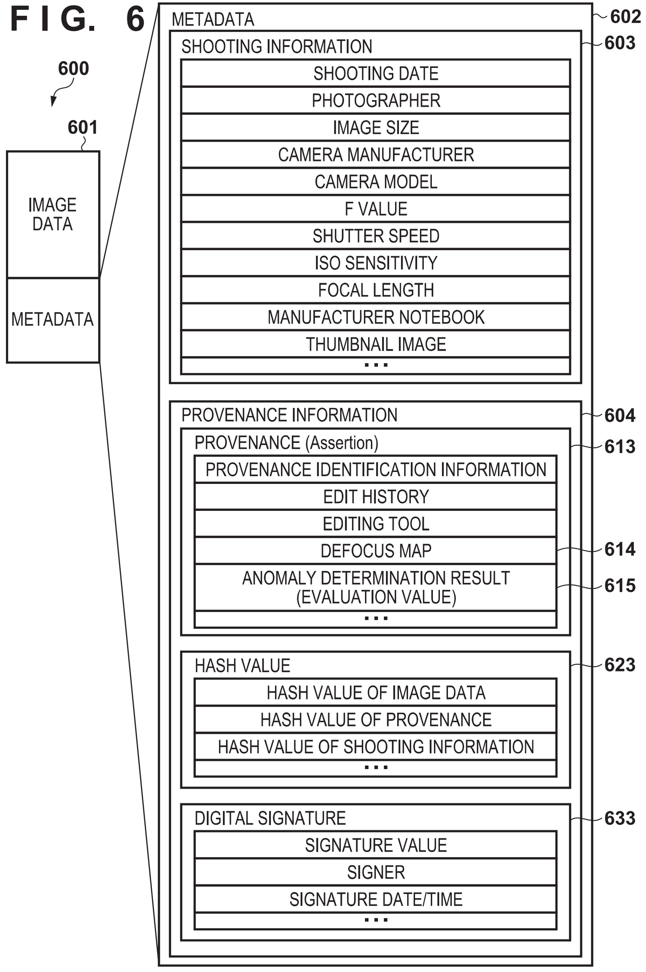

Fig. 6 is a diagram illustrating an example of an image file 600 including metadata. The image file 600 includes image data 601 and metadata 602. The metadata 602 includes shooting information 603 and provenance information 604 of the image data 601.

The shooting information 603 is information pertaining to the image capturing processing for generating the image data 601, and includes, for example, the shooting date/time, the photographer, the image size, the manufacturer and model of the image capturing apparatus 100, various shooting parameters set at the time of shooting, the shooting location, a thumbnail image, and the like. The shooting information 603 is generated according to a predetermined technical standard (e.g., Exchangeable Image File Format (EXIF)).

The provenance information 604 is information for proving the credibility of the image data 601, and is used when verifying the origin and provenance of the image data 601. The provenance information 604 is generated according to a predetermined technical standard (e.g., Coalition for Content Provenance and Authenticity (C2PA)), and has a defined structure. The provenance information 604 includes provenance 613 (assertion), and a hash value 623 and a digital signature 633 for ensuring the provenance 613.

The defocus map generated in step S203 is stored in the provenance 613 as a defocus map 614. The evaluation value generated in step S205 is stored in the provenance 613 (in a region for storing the provenance according to C2PA) as an anomaly determination result 615. The provenance 613 includes information such as provenance identification information (a manifest ID) for uniquely identifying the provenance 613, an edit history indicating details of edits made to the image data 601, an editing tool indicating the tool used for the editing, and the like. Here, the image data generated in step S202 has just been generated in response to a shot being taken and has not yet been edited, and thus information indicating "generated" is stored in the edit history, and information indicating the image capturing apparatus 100 is stored as the editing tool.

A configuration in which the defocus map and the anomaly determination result are stored in the region of the provenance 613 has been described here. However, the present embodiment is not limited to this configuration, and may be such that the defocus map and the anomaly determination result are stored in a region of the shooting information 603, a region of the image data 601, or the like.

In step S207, the hash value generation unit 114 generates the hash value 623 by executing a hash function on binary data of the image data 601 and the provenance 613, respectively. Note that the hash value generation unit 114 may also generate a hash value from the binary data of the shooting information 603.

In step S208, the MPU 101 generates the digital signature 633. The digital signature 633 includes information indicating a signature value, a signer, and a signature date/time. The signature value is generated by encrypting the hash value 623 generated in step S207 using a private key prepared in advance. A public key, serving as the counterpart to the private key used here, is also stored in the digital signature 633. In the present embodiment, information indicating the manufacturer of the image capturing apparatus 100 is stored as the signer.

Note that the manufacturer of the image capturing apparatus 100 is assumed to be treated as a trusted signer that generates the image file at the time of shooting as an origin image. Accordingly, including the digital signature 633 including such a signer in the image file 600 indicates that the image file 600 can be trusted. Furthermore, confirming the hash value information of the anomaly determination result makes it possible to ensure that the shot subject is a three-dimensional object and that the shot image is not anomalous. Note that a model name of the image capturing apparatus 100 may be used as the signer instead of the manufacturer. The date and time at which the digital signature was generated is stored in the signature date/time. The shooting date/time may also be stored in the provenance 613.

In step S209, the MPU 101 adds (associates) the metadata 602 to (with) the image data 601, and generates the image file 600. Here, the image file 600 is generated in JPEG format when the image data 601 is a still image, and in MPEG format when the image data 601 is a moving image.

Note that when the image data 601 is a moving image, the image capturing apparatus 100 generates the anomaly determination result (evaluation value) on a frame-by-frame basis, and generates and signs a representative evaluation value indicating "normal" when there are no anomalies throughout all the frames. However, if even one anomalous frame is present, the image capturing apparatus 100 generates and signs a representative evaluation value indicating the anomaly. Generating the representative evaluation value saves the user from having to check each frame of the moving image, which improves the convenience. The present embodiment is not limited to this configuration, and may employ a configuration in which, for example, when the moving image is in the IPB format, the anomaly determination is made only using an Intra-frame (I-frame). A configuration that is convenient for various moving image formats can be used.

Here, the MPU 101 may add an icon corresponding to the anomaly determination result (an icon indicating the determination result) to the image file 600 when generating the image file 600. As a result, the icon is associated with the shot image.

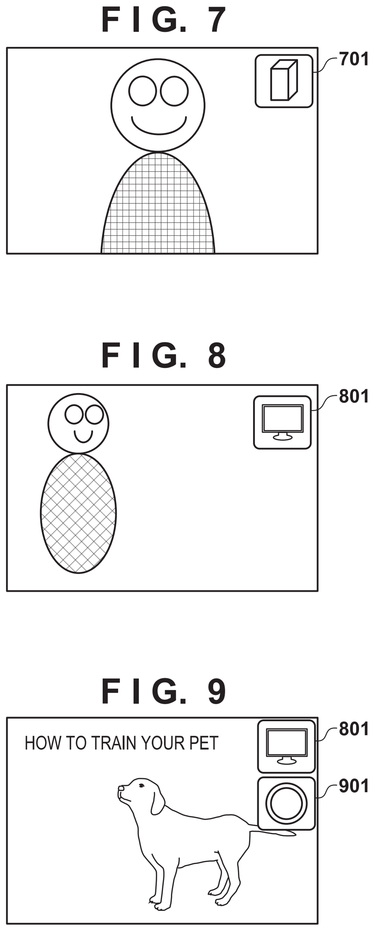

Fig. 7 is a diagram illustrating an icon added to the image file 600 being displayed along with the shot image illustrated in Fig. 3A. Reference sign 701 indicates an icon when the anomaly determination result is "normal" (i.e., when a three-dimensional object is determined to have been shot).

Fig. 8 is a diagram illustrating an icon 801 corresponding to a case where the anomaly determination result is "anomalous" (i.e., when a flat surface is determined to have been shot) being displayed along with the shot image. As illustrated in Figs. 7 and 8, the image and the icon are displayed as a set when the shot image is displayed in the image display unit 108 of the image capturing apparatus 100, an external apparatus, or the like. This increases the visibility of the determination result, which improves the convenience for the user.

In this manner, in the present embodiment, the image capturing apparatus 100 displays an icon indicating the determination result along with the shot image when displaying the shot image. Note that the method for expressing the determination result is not limited to a method using an icon. As long as the information represents the determination result, the image capturing apparatus 100 can use information in any format (e.g., text such as "three-dimensional" or "flat").

In step S210, the MPU 101 records the image file 600 into the storage medium 110.

The foregoing has described a processing sequence through which the image capturing apparatus 100 generates an image file during shooting. In the present embodiment, by analyzing the depth information corresponding to the shot image during shooting, the image capturing apparatus 100 determines whether the shot image is an image obtained by actually shooting a subject having an uneven shape or an image obtained by shooting a subject projected onto a flat surface such as a monitor. By associating the determination result with the shot image, the image capturing apparatus 100 makes it easier for the user to confirm whether the shot image is an anomalous image. The image capturing apparatus 100 can also prevent the anomaly detection determination result from being tampered with by generating a digital signature for the determination result (the evaluation value) and associating the digital signature with the shot image.

Note that the image capturing apparatus 100 can send the image file to an external apparatus such as a PC, smartphone, tablet, or the like (not shown) through the communication unit 115 and the network line 120. In the external apparatus, a user can browse images they shot themselves, publish and disseminate the images over social media services, or the like through an application program. The user can also browse and download images shot by other people, and at that time, it is possible for the user to select and download only images to which an anomaly determination result has been added.

In addition, by uploading image files to a content management apparatus such as a server (not shown), the user can perform processing for verifying the provenance information of the image file, and determine the authenticity thereof. The authenticity is determined by using the public key to verify the signature value of the digital signature in the provenance information of the image file subject to the determination. If the digital signature has been generated using the private key that is the counterpart to the public key, the content management apparatus will be able to correctly decrypt the signature value. The content management apparatus also executes a hash function on the binary data of the provenance to generate a hash value, and determines whether the hash value matches the hash value decrypted using the public key. Accordingly, the content management apparatus determines that the signature value has been successfully verified if the signature value can be decrypted using the public key and the hash value matches, and determines that the signature value has failed to be verified if not.

In addition to determining whether the shot image is an image obtained by shooting a flat object or an image obtained by shooting a three-dimensional object, the image capturing apparatus 100 can also determine whether the shot image is a natural image or an unnatural image using publicly-known subject recognition technology. In this case, the image capturing apparatus 100 treats a state of being flat and unnatural as "anomaly". Specifically, in a case where it is recognized that only a three-dimensional subject (a subject that is usually considered to be three-dimensional), such as a person or an animal, appears, if it is determined that the shot image is an image obtained by shooting a flat object, the shot image is unnatural and is therefore "anomalous". However, an image obtained by shooting a flat object may sometimes be determined to be "natural."

Fig. 9 is a diagram illustrating an example of a case where an image obtained by shooting a flat object is determined to be "natural." The shot image in Fig. 9 is an image obtained by shooting a poster. When shooting a poster, a flat object is determined to have been shot, but the subject recognition technology recognizes that text and a dog (an animal) appear together. In this case, the shot image includes both a flat subject (the text) and a three-dimensional subject (the dog), and thus the image capturing apparatus 100 determines that the shot image is a natural image. Then, the image capturing apparatus 100 displays an icon 901 indicating that the shot image is natural, along with the icon 801 indicating a flat object. In this case, the configuration can be said to be one in which the information expressing the determination result (the icon 801 and the icon 901) notifies the user that the shot image is a natural image.

In addition, the image capturing apparatus 100 may determine whether the shot image includes a three-dimensional subject, regardless of whether the shot image includes a flat subject, using subject recognition technology. In this case, when the shot image is determined to be an image obtained by shooting a flat surface, and the shot image is determined to include a three-dimensional subject, the shot image is determined to be an unnatural image. When the shot image is determined to be an image obtained by shooting a flat surface, and the shot image is determined not to include a three-dimensional subject, the shot image is determined to be a natural image.

The anomaly determination can also be performed using deep learning technology. As an anomaly determination method using deep learning, any publicly-known method can be used, e.g., the anomaly determination method disclosed in "Learning Deep Features for One-Class Classification" <URL: https://arxiv.org/abs/1801.05365>. At this time, to make collecting training data easier, it is preferable to use a configuration in which flat and unnatural images are used as the normal class for transfer learning. An evaluation value indicating "anomaly" may be added to images detected as normal as the final anomaly determination result.

An example of a method for training a machine learning model using a deep learning technique will be described. A person training a machine learning model ("trainer", hereinafter) collects a plurality of shot images and depth information corresponding to each shot image in advance. By applying the processing described with reference to steps S204 and S205 of Fig. 2 to each shot image and the corresponding depth information, the trainer determines whether each shot image is an image obtained by shooting a flat surface. The above-described method using a histogram may be used for this determination, or a method using an average and a variance (or a standard deviation) may be used. Of the plurality of shot images collected in advance, each shot image determined to be an image obtained by shooting a flat surface, and the depth information corresponding thereto, are used to train the machine learning model. Using any desired one of the above-described publicly-known methods, the trainer trains the machine learning model to output an inference result indicating that the shot image is an image obtained by shooting a flat surface when the shot image and corresponding depth information are input.

The machine learning model trained in advance through the above-described method is used by the image capturing apparatus 100 to determine whether a newly-generated shot image is an image obtained by shooting a flat surface. In other words, by inputting the shot image generated in step S202 and the depth information generated in step S203 into the pre-trained machine learning model, the image capturing apparatus 100 can determine whether the shot image is an image obtained by shooting a flat surface. In this manner, in order to determine whether the shot image is an image obtained by shooting a flat surface, a configuration using a machine learning model trained in advance to infer whether the shot image is an image obtained by shooting a flat surface on the basis of the shot image and the corresponding depth information may be employed in the present embodiment.

The foregoing has described a configuration in which the image capturing apparatus 100 analyzes and evaluates the depth information and digitally signs the anomaly determination result (the evaluation value). However, the present embodiment is not limited to this configuration. For example, during shooting, the image capturing apparatus 100 may perform the processing up to the generation of the depth information, and end the processing upon generating the image file including metadata having the depth information. In this case, for example, the image capturing apparatus 100 may analyze and evaluate the depth information when displaying the image. Alternatively, an external apparatus may analyze and evaluate the depth information.

In particular, if the depth information is analyzed and evaluated while the image capturing apparatus 100 is shooting continuously at high speed, and the processing load increases, it is possible that the image capturing apparatus 100 will become unable to shoot continuously at high speed. Using a configuration in which the depth information is analyzed and evaluated later makes it possible to reduce the processing load during shooting.

Furthermore, when using a mode in which the image capturing apparatus 100 performs high-speed continuous shooting during servo AF, there are cases where the image capturing apparatus 100 is unable to obtain the subject detection result, depth information, or the like at the same timing as the shooting of the recorded image. In this case, the image capturing apparatus 100 may use the subject detection result, the depth information, and the like generated at the timing at which the AF is performed as the subject detection result, the depth information, and the like corresponding to the nearest recorded image. In other words, the depth information etc., corresponding to the shot image described above is not limited to information obtained at the same timing as the shooting of the shot image. Such a configuration makes it possible to add the anomaly determination result to an image shot in a shooting mode where the processing load is high.

As described above, according to the first embodiment, the image capturing apparatus 100 (an information processing apparatus) performs determination processing including determining whether a shot image is an image obtained by shooting a flat surface on the basis of depth information (e.g., a defocus map) indicating a distribution of depth values (e.g., defocus values) that are values corresponding to a distance in a depth direction corresponding to the shot image (steps S204 to S205 in Fig. 2). The image capturing apparatus 100 also generates a digital signature for the determination result of the determination processing (steps S206 to S208 in Fig. 2). The image capturing apparatus 100 also associates the determination result and the digital signature with the shot image (step S209 in Fig. 2).

In this manner, according to the present embodiment, the determination result of the determination processing including determining whether the shot image is an image obtained by shooting a flat surface is associated with the shot image along with a digital signature. Accordingly, by confirming the determination result, the user can confirm whether the shot image is an image obtained by shooting a flat surface (or, conversely, whether the shot image is an image obtained by shooting an actual 3D object). Accordingly, the user does not need to visually evaluate the depth information, and the load on the user for confirming whether the shot image is an image obtained by shooting an actual 3D object is reduced.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus comprising:
determination means configured to perform determination processing including determining whether a shot image is an image obtained by shooting a flat surface, based on depth information indicating a distribution of depth values that are values corresponding to distances in a depth direction corresponding to the shot image;
signature means configured to generate a digital signature for a determination result from the determination processing; and
association means configured to associate the determination result and the digital signature with the shot image.

2. The information processing apparatus according to claim 1,
wherein the determination means determines whether the shot image is an image obtained by shooting a flat surface based on a shape of a histogram of the depth values in the depth information.

3. The information processing apparatus according to claim 2,
wherein the determination means determines that the shot image is an image obtained by shooting a flat surface in a case where no peak having a base width greater than a predetermined threshold is present in the histogram.

4. The information processing apparatus according to claim 1,
wherein the determination means determines whether the shot image is an image obtained by shooting a flat surface based on an average of the depth values in the depth information, and a variance or a standard deviation of the depth values in the depth information.

5. The information processing apparatus according to claim 4,
wherein the determination means determines that the shot image is an image obtained by shooting a flat surface in a case where the average is within a predetermined range including a value corresponding to a focus distance of the shot image, and furthermore the variance or the standard deviation is less than a predetermined threshold.

6. The information processing apparatus according to claim 1,
wherein the determination means determines whether the shot image is an image obtained by shooting a flat surface using a machine learning model trained in advance to infer whether the shot image is an image obtained by shooting a flat surface based on the shot image and the depth information.

7. The information processing apparatus according to any one of claims 1 to 6,
wherein the association means associates the determination result and the digital signature with the shot image by including the determination result and the digital signature in an image file that includes the shot image.

8. The information processing apparatus according to claim 7,
wherein the image file includes a region for storing a provenance complying with Coalition for Content Provenance and Authenticity, C2PA, and
the association means stores the determination result in the region for storing the provenance.

9. The information processing apparatus according to any one of claims 1 to 8,
wherein the association means associates an icon indicating the determination result with the shot image.

10. The information processing apparatus according to any one of claims 1 to 9,
wherein the determination processing further includes determining whether the shot image includes a three-dimensional subject.

11. The information processing apparatus according to claim 10,
wherein the determination processing further includes determining whether the shot image includes a flat subject.

12. The information processing apparatus according to claim 11, further comprising:
display means configured to display the shot image along with information expressing the determination result,
wherein in a case where the shot image is an image obtained by shooting a flat surface and furthermore the shot image includes both a three-dimensional subject and a flat subject, the information expressing the determination result, displayed by the display means, is configured to notify a user that the shot image is a natural image.

13. The information processing apparatus according to any one of claims 1 to 11, further comprising:
display means configured to display the shot image along with information expressing the determination result.

14. The information processing apparatus according to any one of claims 1 to 13, further comprising:
detection means configured to detect a subject region in the shot image,
wherein the determination means performs the determination processing based on a part of the depth information corresponding to the subject region.

15. An image capturing apparatus comprising:
the information processing apparatus according to any one of claims 1 to 14;
an image sensor; and
generation means configured to generate the shot image and the depth information by performing shooting using the image sensor.

16. The image capturing apparatus according to claim 15, further comprising:
setting means configured to set a predetermined setting item pertaining to association of the determination result to on or off,
wherein in a case where the predetermined setting item is set to on, the association means associates the determination result and the digital signature with the shot image in response to generation of the shot image.

17. An information processing method executed by an information processing apparatus, comprising:
performing determination processing including determining whether a shot image is an image obtained by shooting a flat surface, based on depth information indicating a distribution of depth values that are values corresponding to distances in a depth direction corresponding to the shot image;
generating a digital signature for a determination result from the determination processing; and
associating the determination result and the digital signature with the shot image.

18. A computer program comprising instructions which, when the program is executed by a computer, cause the computer to carry out the method of claim 17.
